# EUROPEAN PATENT APPLICATION

(11) **EP 2 559 343 A1**
(43) Date of publication of application: **20.02.2013**
(21) Application number: 12180936.2
(22) Date of filing: 17.08.2012
(51) Int. Cl.: A23L 1/015, A23L 1/03, A23L 1/216, A23L 1/217

(54) **Acrylamide mitigation and color management in a formed potato aggregate**

(30) Priority: 17.08.2011 US 201113211474
(71) Applicant: ConAgra Foods RDM, Inc., Omaha, NE 68102-5001 (US)
(72) Inventor: Smith, Gordon Lee, Omaha, NE Nebraska 68168 (US); Higley, Jeremy Scott, Pasco, WA Washington 99301 (US); Hoye Jr, Clifford Louis, Pasco, WA Washington 99301 (US)
(74) Representative: Hamer, Christopher K.

(57) **Abstract**

A process for mitigating acrylamide formation in a formed potato aggregate is disclosed. The acrylamide formation is mitigated while the color formation of the formed potato aggregate is managed. The resulting reconstituted potato aggregate includes low acrylamide levels while exhibiting acceptable organoleptic properties such as taste, color, and texture.

## Description

### BACKGROUND

Acrylamide is a chemical compound that is formed from food components during heat treatment as a result of a Maillard reaction between amino acids such as asparagines and reducing sugars. Various processes have been used to mitigate acrylamide formation in food in small bench scale experiments. However, such experiments have failed to provide food products that have reduced acrylamide in combination with acceptable organoleptic properties such has taste, color, and texture.

### SUMMARY

This Summary is provided to introduce a selection of concepts in a simplified form that are further described below in the Detailed Description. This Summary is not intended to identify key and/or essential features of the claimed subject matter. Also, this Summary is not intended to limit the scope of the claimed subject matter in any manner.

Aspects of the disclosure pertain to a process for mitigating acrylamide formation in a formed potato aggregate while managing the formation of color in the formed potato aggregate. The resulting reconstituted potato aggregate includes low acrylamide levels while exhibiting acceptable organoleptic properties such as taste, color and texture.

### DRAWINGS

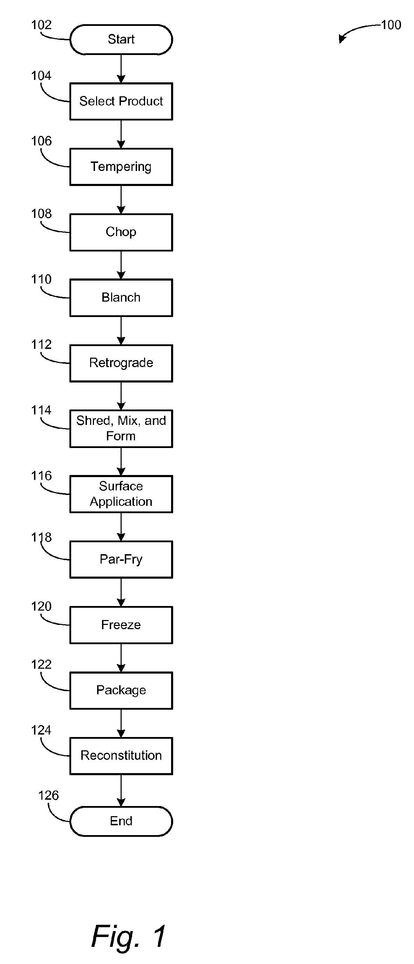

FIGURE 1 is an exemplary operational flow diagram illustrating acrylamide mitigation in a formed potato aggregate.

### DETAILED DESCRIPTION

A formed potato aggregate can include any number of products that include an aggregate of potato pieces. The potato pieces can include chunks or shreds of potatoes and the form of the aggregate can include patties, barrel shaped pieces such as tater tots, ball shaped pieces, and the like. Given that potato aggregates are formed with multiple chunks or shreds of potatoes, the potato aggregates have a high surface area exposure as compared to whole potato pieces. The high surface area exposure provides areas for the formation of acrylamide because frying oil can access the inner surfaces of the aggregate via gaps in the aggregate matrix. Acrylamide is typically formed in the potato aggregate during one or more frying operations. Heat causes a Maillard reaction between asparagines and free reducing sugars.

Prior processes for mitigating acrylamide have resulted in a potato aggregate with less than desirable organoleptic properties. As an example associated with color, many consumers and restaurants have come to identify potato aggregates with a particular color. For example, a golden color is many times considered an acceptable color for potato aggregates. During the frying process of potato aggregates, the frying (browning) that causes the golden color that is indicative of many potato aggregates is also indicative of the level of acrylamide formation in the potato aggregates. Stated another way, as the browning of the potato aggregate increases, the acrylamide levels also increase. Conversely, as the browning of the potato aggregate decreases, acrylamide levels also decrease. As such, many acrylamide mitigation processes result in less acrylamide formation but the resulting potato aggregate has a near white color after frying. The near white color is typically unacceptable to consumers who are accustomed to the golden color indicative of many potato aggregates.

Notwithstanding the undesirable potato aggregate color that results from prior acrylamide mitigation processes, prior mitigation processes are also inefficient, result in mitigation variability, and can result in a potato aggregate with an unacceptable taste. Typically, acrylamide mitigation occurs in a blanch system. The blanch system typically includes a volume of water. The blanch system also includes fresh water injection into the blanch system. To mitigate acrylamide, a food grade acid or calcium chloride can be added to the blanch system. The concentration of the food grade acid or calcium chloride in the blanch system is difficult to maintain consistently because the blanch system includes a relatively large volume of water and the blanch system receives fresh water on a regular basis. Accordingly, concentrations of acid or calcium chloride in the blanch system is typically in flux and requires frequent monitoring to properly mitigate acrylamide. Such active monitoring utilizes human and facility resources, creates inconsistencies in mitigation, and creates costs.

Furthermore, potatoes are blanched for a period of time in the blanch system. The typical period of time to blanch a potato is greater than the time for acrylamide mitigation. Given that the blanching time is typically the limit, potatoes are subjected to the food grade acid or calcium chloride in the blanch system for longer periods of time than necessary to mitigate acrylamide. Accordingly, there is more time for the potato to absorb the taste profile of the food grade acid or calcium chloride. The taste profile is typically unacceptable to consumers and customers.

As more fully set forth herein, aspects of the disclosure pertain to an efficient process for acrylamide mitigation to produce a potato aggregate with acceptable organoleptic properties. Acrylamide mitigation is achieved by applying an acrylamide mitigating component to the surface of the formed potato aggregate. For example, a divalent metal salt, such as CaCl₂, can be incorporated into a batter in an amount sufficient to interfere with the Maillard reaction and mitigate the formation of acrylamide during par-fry and reconstitution. By including the acrylamide mitigation component in the batter, the potato aggregate form is maintained during par-frying by the "scaffolding" formed by the batter and the quantity of the acrylamide mitigation component can be minimized in that the component is located on the potato aggregate at a position where the Maillard reaction occurs (i.e., the surface). As such, the flavor impact of the acrylamide mitigating component and cost associated with the acrylamide mitigation component can be mitigated.

Aspects of the disclosure also pertain to a color management operation associated with the batter. A color augmenter can be applied to the potato aggregate to prepare the potato aggregate to have a particular color value after the potato aggregate is reconstituted. For example, the color augmenter can include a colorant and/or a browning agent. The combination of the acrylamide mitigation operations and the color management operation result in a potato aggregate that is formed to create a refried potato aggregate having a golden color and mitigated acrylamide formation.

### A. METHODS AND PROCESSES

FIGURE 1 is an exemplary operational flow diagram illustrating acrylamide mitigation and color management in a potato aggregate. Operational flow 100 is depicted in FIGURE 1 as a series of operations. As indicated herein, the order of the operations can be rearranged or reconfigured in at least the circumstances discussed below. As also indicated, certain operations can be eliminated from the operational flow 100 depending on the starting product and the desired end product. Operations are exemplarily indicted. Certain operations can be decision operations which may or may not be utilized in operation 100 depending on the starting product, the level of acrylamide mitigation, and color management desired. Operations associated with operational flow 100 can be automatic in response to an event, manual in response to an operator determination, operator driven, software driven, and/or equipment driven. The combinations and subcombinations are more fully set forth below.

### 1. Product Selection

Operational flow 100 begins at start operation 102 and continues to operation 104 where a raw product is selected. The raw product can be selected on any number of criteria. As an example, a raw product can be selected based on a customer's product specification for potato aggregates. The term "product" can be used herein to pertain to a raw food item, a starting food item, an ending food item, and/or a food item at any point in operational flow 100. The product can include a potato. Examples of potatoes include, but are not limited to, Russet potatoes, Goldrush potatoes, White potatoes, Red potatoes, Yellow potatoes, Ruby potatoes, Australian potatoes, Yukon potatoes, Peruvian Blue potatoes, Superior potatoes, Kennebec potatoes, Katchdin potatoes, and New potatoes. Although not technically considered a potato, the term "potato" as used herein can also include a sweet potato. Again, the above examples are not meant to be an exhaustive list, but a list of a few examples of products that can utilize the aforementioned methods and processes. The product selected can go through a wash, sort, and/or peel step. Products can be sorted for a specific size or other attribute to give a unique appearance such as a specific size or type of cut.

### 2. Tempering

From select operation 104, operational flow 100 can continue to tempering operation 106 where the product is tempered. Tempering allows for uniform cuts on the product when the product is processed. Tempering also provides for a smooth cut and mitigates jagged edges on the product. As one non-limiting example associated with a potato product, a potato can be tempered at a temperature from about 100°F to about 155°F for about 30 to 40 minutes. In one aspect, the potato is tempered at a temperature from about 130°F to about 140°F. The potato can be tempered at a temperature from about 100°F, 105°F, 110°F, 115°F, 120°F, 125°F, 130°F, 135°F, 140°F, 145°F, 150°F, 155°F, to about 100°F, 105°F, 110°F, 115°F, 120°F, 125°F, 130°F, 135°F, 140°F, 145°F, 150°F, 155°F. The potato can be tempered from about 30, 31, 32, 33, 34, 35, 36, 37, 38, 39, 40 minutes to about 30, 31, 32, 33, 34, 35, 36, 37, 38, 39, 40 minutes. As an example associated with a sweet potato, sweet potatoes may not be tempered.

### 3. Chop

From tempering operation 106, operational flow 100 can continue to chop operation 108 to create potato pieces. At chop operation 108, the product can be chopped into desirable shapes and sizes. The cut can be manual, mechanical, or via a water knife. The product can be cut into a thickness from about 0.05 inches to about 0.50 inches. The product can have a thickness from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. Although not depicted, from chop operation 108, operational flow 100 can continue to a defect removal operation. At the defect removal operation, the chopped product goes through a defect removal process. This process eliminates products that contain defects or cuts the defects off of the product. This process improves the appearance of the finished product by minimizing the amount of defects seen on the final product.

### 4. Blanching

From chop operation 108, operational flow 100 can continue to blanch operation 110. During blanching, simple carbohydrates in the potatoes are removed from the potatoes and complex carbohydrates are concentrated in the potatoes. Blanching generally takes place via a blanching system. The blanching system can include a blanch bath, a heat oven, infrared heating, microwave heating, steam heating, spray heating and/or forced air heating. The blanching system can include a water volume and one or more of flavorings, additives and/or starches. The potato pieces can be blanched at a temperature from about 150°F to 200°F for about 2 to 20 minutes. The potato pieces can be blanched from about 150°F, 155°F, 160°F, 165°F, 170°F, 175°F, 180°F, 185°F, 190°F, 195°F, 200°F to about 150°F, 155°F, 160°F, 165°F, 170°F, 175°F, 180°F, 185°F, 190°F, 195°F, 200°F. The potato pieces can be blanched from about 2, 3, 4, 5, 6, 7, 8, 9, 10, 11, 12, 13, 14, 15, 16, 17, 18, 19, 20 minutes to about 2, 3, 4, 5, 6, 7, 8, 9, 10, 11, 12, 13, 14, 15, 16, 17, 18, 19, 20 minutes.

### 5. Retrograde

From blanch operation 110, operational flow 100 can continue to starch retrograde operation 112. Retrograde operation 112 can include the controlled cooling of the product with cool air to cause amylose chains to realign while cooling. At starch retrograde operation 112, the product can undergo retrogradation via shaking, forced air, oven heat, infrared, microwave, mechanical moisture reduction, chemical moisture reduction, drip drying, atmospheric drying, or other methods. Retrogradation facilitates the product texture and physical integrity of the formed product. As an example, retrograding can occur for about 10 minutes to about 20 minutes.

### 6. Shred, Mix & Form

From starch retrograde operation 112, operational flow 100 can continue to shred, mix & form operation 114. Shredding may include shredding the diced product to a shred size. Typical shred sizes can include 5/16", 3/8", 3/16" and the like. Shredding may occur by passing the potatoes over a shredding plate. Such devices can include, for example, a shredder produced by Idaho Steel®.

After the product is shredded, the shredded product can be mixed. In one aspect, the product can be mixed with dry and/or wet ingredients such as starch, binders, flavorings, seasonings and/or others desirable ingredients that may improve texture, flavor, color, or other aspects of the final product. In one aspect, the mixture includes from about 90% to about 99% shredded potatoes by total weight of the mixture. The mixture can include from about 0.1 % to about 5.0% flour by total weight of the mixture. The mixture can further include from about 0.001 % to about 1.0% flavoring by total weight of the mixture. In other aspects, the mixture can include about 0.1 % to about 3.0% salt by total weight of the mixture.

After mixing, the product can be formed into a product shape. Shapes can include cylinders, patties, cakes, and other shapes. Such shapes can be formed by extruding the shredded and mixed product through a forming head having a cross-sectional shape that corresponds to the desired shape of the product. A wire cutter, knife, or other device can be used to separate an extruded portion of the shredded and mixed product from the reminder of the product that has not yet passed the forming head. In one aspect, the potato aggregate can have a rectangular shape. The potato aggregate can have a weight from about 50 to about 150 grams. The potato aggregate can have a width from about 2 inches to about 4 inches. The potato aggregate can have a length from about 3 inches to about 5 inches. The potato aggregate can have a thickness from about 0.25 inches to about 1 inch. Another example size and shape for a potato aggregate can include a cylinder such as a TATOR TOT® type potato aggregates. For example, the potato aggregate can have a diameter that is from about 0.5 inches to about 1.5 inches. The potato aggregate can have a weight from about 6 grams to about 12 grams.

### 7. Surface Application

From operation 114, operational flow 100 can continue to surface application operation 116. Surface application operation 116 can include applying a batter to the potato aggregate. The batter can be a consumer perceivable batter and the batter can be a consumer unperceivable batter such as a coating. During surface application operation 116, the product can go through a combination of battering and predusting/breading. Predusting/breading can include different coarsenesses of flour, a combination of dry ingredients that could include flour, baked cracked meal, starch, flavors, colors, spices, or other dry ingredients. The product could be battered, predusted then battered, battered-predusted-battered, battered-predusted-battered-predusted/breaded, etc. When multiple batters are used, they can be the same batter or different batter. In one aspect, the batter is at a viscosity to facilitate spraying of the batter onto the potato aggregate.

Various kinds of starch (functional starches and/or flours) can be utilized in the batter, such as corn starch, potato starch, tapioca starch, arrowroot starch, rice starch, oat starch, barley starch, wheat starch, and combinations thereof. The batter composition can include starches, dextrin, fiber, gums, flours, proteins, flavors, spices, colors, seasonings, and ingredients thereof.

At least one example of a dry mix for a batter for the potato aggregate can include starch at about 50% to about 70% total weight of the dry batter. The dry batter can include flour at about 15% to about 25% total weight of the dry batter. The dry batter can include dextrin at about 5.0% to about 15.0% total weight of the dry batter. The dry batter can include salt at about 2.0% to about 3.0% total weight of the dry batter. The batter can include sodium acid pyrophosphate at about 0.5% to about 1.5% total weight of the dry batter. The batter can include baking soda at about 0.5% to about 1.5% total weight of the dry batter. The batter also can include gum powder at about 0.01 % to about 0.2% total weight of the dry batter.

A divalent metal salt, such as calcium chloride, can be incorporated into the batter in an amount sufficient to interfere with the Maillard reaction and mitigate the formation of acrylamide during reconstitution. Other examples of acrylamide mitigation components can include calcium carbonate, calcium lactate, calcium citrate, and the like. The batter can include about 0.1 % to about 10.0% calcium chloride by weight of the batter dry mix. For example the can include calcium chloride (by dry weight of the batter) fromabout 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%, 8.10%, 8.20%, 8.30%, 8.40%, 8.50%, 8.60%, 8.70%, 8.80%, 8.90%, 9.00%, 9.10%, 9.20%, 9.30%, 9.40%, 9.50%, 9.60%, 9.70%, 9.80%, 9.90%, 10.00% to about 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%8.10%, 8.20%, 8.30%, 8.40%, 8.50%, 8.60%, 8.70%, 8.80%, 8.90%, 9.00%, 9.10%, 9.20%, 9.30%, 9.40%, 9.50%, 9.60%, 9.70%, 9.80%, 9.90%, 10.00%.

The batter can further include a color augmenter. The color augmenter can be selected based on a target reflective value for the potato aggregate upon reconstitution. For example, the target reflective value can be less than about 65, 64, 63, 62, 61, 60, 59, 58, 57, 56, 55, 54, 53, 52, 51, 50. In other aspects, the target reflective value can be from about 40, 41, 42, 43, 44, 45, 46, 47, 48, 49, 50, 51, 52, 53, 54, 55, 56, 57, 58, 59, 60, 61, 62, 63, 64, 65 to about 40, 41, 42, 43, 44, 45, 46, 47, 48, 49, 50, 51, 52, 53, 54, 55, 56, 57, 58, 59, 60, 61, 62, 63, 64, 65. In still other aspects, the average target reflective value for a batch (e.g., 1.5 pounds) of potato aggregate can be from about 46, 47, 48, 49, 50, 51, 52 to about 46, 47, 48, 49, 50, 51, 52.

The color augmenter can include a colorant and/or a browning agent. The color augmenter can be applied to the potato aggregate via the batter. Stated another way, the batter can include the color augmenter. Colorants can include any type of food colorant. For example, the colorant can include caramel, annatto, Turmeric, and combinations thereof. In one aspect, the colorant is in a powder form. In one aspect, the colorant is a powder that includes about 0.01 % to about 0.2% annatto by dry weight of the batter. In other aspects, the colorant is a powder that includes about 0.2% to about 0.6% caramel powder by dry weight of the batter. In still other aspects, the colorant is a powder that includes about 0.2% to about 0.6% Tumeric powder by dry weight of the batter. The powder can include about 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20% to about 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20% annatto. The powder can include about 0.20%, 0.22%, 0.24%, 0.26%, 0.28%, 0.30%, 0.32%, 3.34%, 0.36%, 0.38%, 0.40%, 0.42%, 0.44%, 0.46%, 0.48%, 0.50%, 0.52%, 0.54%, 0.56%, 0.58%, 0.60% to about 0.20%, 0.22%, 0.24%, 0.26%, 0.28%, 0.30%, 0.32%, 3.34%, 0.36%, 0.38%, 0.40%, 0.42%, 0.44%, 0.46%, 0.48%, 0.50%, 0.52%, 0.54%, 0.56%, 0.58%, 0.60% caramel. The powder can include about 0.20%, 0.22%, 0.24%, 0.26%, 0.28%, 0.30%, 0.32%, 3.34%, 0.36%, 0.38%, 0.40%, 0.42%, 0.44%, 0.46%, 0.48%, 0.50%, 0.52%, 0.54%, 0.56%, 0.58%, 0.60% to about 0.20%, 0.22%, 0.24%, 0.26%, 0.28%, 0.30%, 0.32%, 3.34%, 0.36%, 0.38%, 0.40%, 0.42%, 0.44%, 0.46%, 0.48%, 0.50%, 0.52%, 0.54%, 0.56%, 0.58%, 0.60% Tumeric. In another aspect, the dry batter mix can include the colorant at about 0.1% to about 1.5% total weight of the dry batter mix. The colorant can be about 0.1 %, 0.2%, 0.3%, 0.4%, 0.5%, 0.6%, 0.7%, 0.8%, 0.9%, 1.0%, 1.1%, 1.2%, 1.3, 1.4%, 1.5% total weight of the dry batter mix to about 0.1%, 0.2%, 0.3%, 0.4%, 0.5%, 0.6%, 0.7%, 0.8%, 0.9%, 1.0%, 1.1%, 1.2%, 1.3, 1.4%, 1.5% total weight of the dry batter mix. The colorant can also include spices, paprika, red pepper, black pepper, and combinations thereof.

The browning agent can include an agent that causes browning during a reconstitution process. An example of a browning agent can include a sugar. Even though the sugar can cause an increase in acrylamide level upon reconstitution, sugar can be used to manage color development and provide highlighting on the potato aggregate during reconstitution. Unexpectedly, the sugar can be utilized strategically to give the potato aggregate highlighting to an acceptable level without completely negating the effect of the acrylamide management operation. An example sugar used as a browning agent can include dextrose. In one aspect, the browning agent is in a powder form in the batter from about 0.1 % to about 0.3% total weight of the dry batter. The browning agent can be in a powder at a concentration level from about 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30% total weight of the dry batter mix to about 0.10%, 0.11 %, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30% total weight of the dry batter mix. The browning agent can be applied at several locations in operational flow 100. For example, the browning agent can be associated with the batter. The browning agent can be applied after the potato aggregates are battered. The browning agent can also be applied after the potato aggregates are par-fried as indicated below.

After surface application operation 116, the potato aggregates have a managed color. The potato aggregates are capable of yielding reconstituted potato aggregates having a color and acrylamide level, upon being reconstituted, as indicated below. In one aspect, the potato aggregates are capable of yielding an acrylamide level of less than about 400, 395, 390, 385, 380, 375, 370, 365, 360, 355, 350, 345, 340, 335, 330, 325, 320, 315, 310, 305, 300, 295, 290, 285, 280, 275, 270, 265, 260, 255, 250, 245, 240, 235, 230, 225, 220, 215, 210, 205, 200, 195, 190, 190, 185, 180, 175, 170, 165, 160, 155, 150, 145, 140, 135, 130, 125, 120, 115, 110, 105, 100, 95, 90, 85, 80, 75, 70, 65, 60, 55 and 50 ppb. In another aspect, the potato aggregates are capable of yielding a reduction in acrylamide levels in comparison to untreated potato aggregates upon reconstitution. The reduction in acrylamide levels can be greater than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato aggregates are capable of yielding a reflective value of less than about 65, 64, 63, 62, 61, 60, 59, 58, 57, 56, 55, 54, 53, 52, 51, 50. In other aspects, the reflective value can be from about 46, 47, 48, 49, 50, 51, 52 to about 46, 47, 48, 49, 50, 51, 52. In still other aspects, the average reflective value for a batch (e.g., about 1.5 pounds) of potato aggregates can be from about 48, 49, 50 to about 48, 49, 50.

### 8. Par-Fry

From surface application operation 116, operational flow 100 can continue to par-fry operation 118. At par-fry operation 118, the product can be fried in hot oil. The potato aggregates can be fried in any hot oil suitable for frying, such as high oleic oil, low linolenic oil, saturated, unsaturated, polyunsaturated, and/or monounsaturated fats/oils. As a non-limiting example, the potato aggregates can be fried from about 350°F to 400°F. The potato aggregates can be fried from about 350°F, 355°F, 360°F, 365°F, 370°F, 375°F, 380°F, 385°F, 390°F, 395°F, 400°F to about 350°F, 355°F, 360°F, 365°F, 370°F, 375°F, 380°F, 385°F, 390°F, 395°F, 400°F. The potato aggregates can be par-fried from about 10, 20, 30, 40, 50, 60, 70, 80, 90, 100, 110, 120, 130, 140, 150, 160, 170, 180, 190, and 200 seconds to about 10, 20, 30, 40, 50, 60, 70, 80, 90, 100, 110, 120, 130, 140, 150, 160, 170, 180, 190, and 200 seconds. In one aspect, when the potato aggregates are to be reconstitution via a fry process, the potato aggregates can be par-fried from about 60, 65, 70, 75, 80, 85, 90 seconds to about 60, 65, 70, 75, 80, 85, 90 seconds. In yet another aspect, when the potato aggregates are to be reconstitution via a baking process, the potato aggregates can be par-fried from about 90, 95, 100, 105, 110, 115, 120, 125, 130, 135, 140, 145, 150, 155, 160, 165, 170 ,175, 180, 185, 190, 195, 200 seconds to about 90, 95, 100, 105, 110, 115, 120, 125, 130, 135, 140, 145, 150, 155, 160, 165, 170, 175, 180, 185, 190, 195, 200 seconds.

### 10. Freeze

From par-fry operation 118, operational flow 100 can optionally continue to freeze operation 120. The potato aggregates can undergo freeze operation 120 when shipping to another location. In one aspect, the potato aggregates can be initially cooled to a temperature from about 40°F to about 180°F to remove the latent heat. The potato aggregates can be cooled for about 5 minutes. Cooling can speed up the freeze operation 120 and further reduce the moisture content of the potato aggregates. The potato aggregates can be quickly frozen until the potato aggregates reach a temperature of no more than 32°F. In another aspect, the potato aggregates are frozen until they reach a temperature less than 18°F. In other aspects, the potato aggregates temperature can be about 5°F to about 25°F The potato aggregates can be quick frozen at a temperature from about -40 °F to 0°F. In one aspect, the potato aggregates are frozen from about 1 minute to about 15 minutes.

### 11. Packaging & Shipping

Operational flow 100 continues to package operation 122 where the potato aggregates are packaged and shipped. In one aspect, the potato aggregates are packaged in bundles. For example, the package can include potato aggregates having a weight from about 0.5, 1.0, 1.5, 2.0, 2.5, 3.0, 3.5, 4.0, 4.5, 5.0, 6.0, 7.0, 8.0, 9.0, 10.0, 15.0, 20.0, 25.0, 30.0, 40.0, 50 pounds to about 0.5, 1.0, 1.5, 2.0, 2.5, 3.0, 3.5, 4.0, 4.5, 5.0, 6.0, 7.0, 8.0, 9.0, 10.0, 15.0, 20.0, 25.0, 30.0, 40.0, 50 pounds.

### 12. Reconstitution

From package operation 122, operational flow 100 can continue to reconstitution operation 124. Reconstitution operation can include frying, baking or microwaving the potato aggregates to a fully cooked state. Reconstitution operation 124 can include refrying the potato aggregates for consumption. The potato aggregates can be fried in hot oil. The potato aggregates can be fried in any hot oil suitable for frying, such as high oleic oil, low linolenic oil, saturated, unsaturated, polyunsaturated, and/or monounsaturated fats/oils. As a non-limiting example, the potato aggregates can be fried from about 300°F to 400°F. The potato aggregates can be fried from about 300°F, 305°F, 310°F, 315°F, 320°F, 325°F, 330°F, 335°F, 340°F, 345°F, 350°F, 355°F, 360°F, 365°F, 370°F, 375°F, 380°F, 385°F, 390°F, 395°F, 400°F to about 300°F, 305°F, 310°F, 315°F, 320°F, 325°F, 330°F, 335°F, 340°F, 345°F, 350°F, 355°F, 360°F, 365°F, 370°F, 375°F, 380°F, 385°F, 390°F, 395°F, 400°F. The potato aggregates can be fried from about 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0 minutes to about 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0 minutes.

In other aspects, the potato aggregates can be reconstituted via convectional or conventional oven. The potato aggregates can be reconstituted in an oven from about 350°F to 500°F. The potato aggregates can be reconstituted from about 350°F, 355°F, 360°F, 365°F, 370°F, 375°F, 380°F, 385°F, 390°F, 395°F, 400°F, 405°F, 410°F, 415°F, 420°F, 425°F, 430°F, 435°F, 440°F, 445°F, 450°F, 455°F, 460°F, 465°F, 470°F, 475°F, 480°F, 485°F, 490°F, 495°F, 500°F to about 350°F, 355°F, 360°F, 365°F, 370°F, 375°F, 380°F, 385°F, 390°F, 395°F, 400°F, 405°F, 410°F, 415°F, 420°F, 425°F, 430°F, 435°F, 440°F, 445°F, 450°F, 455°F, 460°F, 465°F, 470°F, 475°F, 480°F, 485°F, 490°F, 495°F, 500°F. The potato aggregates can be reconstituted from about 5 to about 30 minutes. The potato aggregates can be reconstituted from about 5, 10, 15, 20, 25, 30 minutes to about 5, 10, 15, 20, 25, 30 minutes.

After reconstitution operation 124, the potato aggregates have a color and acrylamide level and the process ends at operation 126. In one aspect, the potato aggregates have an acrylamide level of less than about 400, 395, 390, 385, 380, 375, 370, 365,360,355,350,345,340,335,330,325,320,315,310,305,300,295,290,285,280, 275, 270, 265, 260, 255, 250, 245, 240, 235, 230, 225, 220, 215, 210, 205, 200, 195, 190, 190, 185, 180, 175, 170, 165, 160, 155, 150, 145, 140, 135, 130, 125, 120, 115, 110, 105, 100, 95, 90, 85, 80, 75, 70, 65, 60, 55 and 50 ppb. In another aspect, the potato aggregates have a reduction in acrylamide levels in comparison to untreated potato aggregates upon reconstitution. The reduction in acrylamide levels can be greater than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato aggregates have a reflective value of less than about 65, 64, 63, 62, 61, 60, 59, 58, 57, 56, 55, 54, 53, 52, 51, 50. In other aspects, the reflective value can be from about 46, 47, 48, 49, 50, 51, 52 to about 46, 47, 48, 49, 50, 51, 52. In still other aspects, the average reflective value for a batch (e.g., about 1.5 pounds) of potato aggregates can be from about 48, 49, 50 to about 48, 49, 50.

### B. POTATO AGGREGATE PRODUCT

As more fully set forth below, the potato aggregate is described at two points in the process. The potato aggregate is described at a raw state after surface application operation 116 and before par-fry operation 118. The potato aggregate product is also described at a reconstituted state after reconstitution operation 124.

### 1. Raw State

The raw state of the potato aggregate can include a size and shape. Shapes can include cylinders, patties, cakes, and other shapes. Such shapes can be formed by extruding the shredded and mixed product through a forming head having a cross-sectional shape that corresponds to the desired shape of the product. In one aspect, the raw potato aggregate can have a rectangular shape. The raw potato aggregate can have a weight from about 50 to about 150 grams. The raw potato aggregate can have a width from about 2 inches to about 4 inches. The raw potato aggregate can have a length from about 3 inches to about 5 inches. The raw potato aggregate can have a thickness from about 0.25 inches to about 1 inch. Another example size and shape for a potato aggregate can include a cylinder such as a TATOR TOT® type potato aggregates. For example, the potato aggregate can have a diameter that is from about 0.5 inches to about 1.5 inches. The potato aggregate can have a weight from about 6 grams to about 12 grams.

The raw potato aggregate can have a calcium content. The potato aggregate can have from about 0.010%, 0.015%, 0.020%, 0.025%, 0.030%, 0.035%, 0.040%, 0.045%, 0.050%, 0.055%, 0.060%, 0.065%, 0.070%, 0.075%, 0.080%, 0.085%, 0.090%, 0.095%, 0.100% calcium by total weight of the potato aggregate to about 0.010%, 0.015%, 0.020%, 0.025%, 0.030%, 0.035%, 0.040%, 0.045%, 0.050%, 0.055%, 0.060%, 0.065%, 0.070%, 0.075%, 0.080%, 0.085%, 0.090%, 0.095%, 0.100% calcium by total weight of the potato aggregate.

The raw potato aggregate can have a moisture content. The moisture content can be from about 70% to about 80% of the total weight of the raw potato aggregate. The moisture content can be from about 70%, 71%, 72%, 73%, 74%, 75%, 76%, 77%, 78%, 79%, 80% total weight of the potato aggregate to about 70%, 71 %, 72%, 73%, 74%, 75%, 76%, 77%, 78%, 79%, 80% total weight of the potato aggregate.

The raw potato aggregate can have a color augmenter. The color augmenter can include a colorant and/or a browning agent. Colorants can include any type of food colorant. For example, the colorant can include caramel, annatto, Turmeric, and combinations thereof. An example of a browning agent can include a sugar. An example sugar used as a browning agent can include dextrose.

The raw potato aggregate is capable of yielding a reconstituted potato aggregate having a color and acrylamide level, upon being reconstituted, as indicated below. The potato aggregates are capable of yielding reconstituted potato aggregates having a color and acrylamide level, upon being reconstituted, as indicated below. In one aspect, the potato aggregates are capable of yielding an acrylamide level of less than about 400, 395, 390, 385, 380, 375, 370, 365, 360, 355, 350, 345, 340, 335, 330, 325, 320, 315, 310, 305, 300, 295, 290, 285, 280, 275, 270, 265, 260, 255, 250, 245, 240, 235, 230, 225, 220, 215, 210, 205, 200, 195, 190, 190, 185, 180, 175, 170, 165, 160, 155, 150, 145, 140, 135, 130, 125, 120, 115, 110, 105, 100, 95, 90, 85, 80, 75, 70, 65, 60, 55 and 50 ppb. In another aspect, the potato aggregates are capable of yielding a reduction in acrylamide levels in comparison to untreated potato aggregates upon reconstitution. The reduction in acrylamide levels can be greater than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato aggregates are capable of yielding a reflective value of less than about 65, 64, 63, 62, 61, 60, 59, 58, 57, 56, 55, 54, 53, 52, 51, 50. In other aspects, the reflective value can be from about 46, 47, 48, 49, 50, 51, 52 to about 46, 47, 48, 49, 50, 51, 52. In still other aspects, the average reflective value for a batch (e.g., about 1.5 pounds) of potato aggregates can be from about 48, 49, 50 to about 48, 49, 50.

### 2. Reconstituted State

The reconstituted state of the potato aggregate can include a size and shape. Shapes can include cylinders, patties, cakes, and other shapes. Such shapes can be formed by extruding the shredded and mixed product through a forming head having a cross-sectional shape that corresponds to the desired shape of the product. In one aspect, the reconstituted potato aggregate can have a rectangular shape. The reconstituted potato aggregate can have a weight from about 50 to about 150 grams. The reconstituted potato aggregate can have a width from about 2 inches to about 4 inches. The reconstituted potato aggregate can have a length from about 3 inches to about 5 inches. The reconstituted potato aggregate can have a thickness from about 0.25 inches to about 1 inch. Another example size and shape for a potato aggregate can include a cylinder such as a TATOR TOT® type potato aggregates. For example, the potato aggregate can have a diameter that is from about 0.5 inches to about 1.5 inches. The potato aggregate can have a weight from about 6 grams to about 12 grams.

The reconstituted potato aggregate can have a calcium content. The potato aggregate can have from about 0.010%, 0.015%, 0.020%, 0.025%, 0.030%, 0.035%, 0.040%, 0.045%, 0.050%, 0.055%, 0.060%, 0.065%, 0.070%, 0.075%, 0.080%, 0.085%, 0.090%, 0.095%, 0.100% calcium by total weight of the potato aggregate to about 0.010%, 0.015%, 0.020%, 0.025%, 0.030%, 0.035%, 0.040%, 0.045%, 0.050%, 0.055%, 0.060%, 0.065%, 0.070%, 0.075%, 0.080%, 0.085%, 0.090%, 0.095%, 0.100% calcium by total weight of the potato aggregate.

The reconstituted potato aggregate can have a moisture content. The moisture content can be from about 50% to about 65% of the total weight of the raw potato aggregate. The moisture content can be from about 50%, 51%, 52%, 53%, 54%, 55%, 56%, 57%, 58%, 59%, 60%, 61%, 62%, 63%, 64%, 65% total weight of the potato aggregate to about 50%, 51%, 52%, 53%, 54%, 55%, 56%, 57%, 58%, 59%, 60%, 61%, 62%, 63%, 64%, 65% total weight of the potato aggregate.

The reconstituted potato aggregate can have a color augmenter. The color augmenter can include a colorant and/or a browning agent. Colorants can include any type of food colorant. For example, the colorant can include caramel, annatto, Turmeric and combinations thereof. An example of a browning agent can include a sugar. An example sugar used as a browning agent can include dextrose.

The reconstituted potato aggregate can have having a color and acrylamide level, upon being reconstituted, as indicated below. In one aspect, the potato aggregates have an acrylamide level of less than about 400, 395, 390, 385, 380, 375, 370, 365, 360, 355, 350, 345, 340, 335, 330, 325, 320, 315, 310, 305, 300, 295, 290, 285, 280, 275, 270, 265, 260, 255, 250, 245, 240, 235, 230, 225, 220, 215, 210, 205, 200, 195, 190, 190, 185, 180, 175, 170, 165, 160, 155, 150, 145, 140, 135, 130, 125, 120, 115, 110, 105, 100, 95, 90, 85, 80, 75, 70, 65, 60, 55 and 50 ppb. In another aspect, the potato aggregates have a reduction in acrylamide levels in comparison to untreated potato aggregates upon reconstitution. The reduction in acrylamide levels can be greater than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato aggregates have a reflective value of less than about 65, 64, 63, 62, 61, 60, 59, 58, 57, 56, 55, 54, 53, 52, 51, 50. In other aspects, the reflective value can be from about 46, 47, 48, 49, 50, 51, 52 to about 46, 47, 48, 49, 50, 51, 52. In still other aspects, the average reflective value for a batch (e.g., about 1.5 pounds) of potato aggregates can be from about 48, 49, 50 to about 48, 49, 50.

### C. EXAMPLES

As more fully set forth below, the collective examples demonstrate the impact of a color augmenter on the development of color and acrylamide in a potato aggregate.

In each of the examples below, the analytical method for analyzing acrylamide of the sample follows the FDA 2003 draft method. In this method, the sample is spiked with ¹³C₃-acrylamide, extracted in water with shaking, centrifugation, and filtrated under ambient conditions, followed by clean-up of extract using two solid phase extraction (SPE) cartridges (Oasis HLB and BondElut Accucat). Reversed phase liquid chromatography (RP-LC) is performed using mobile phase 0.1% acetic acid/0.5% methanol. Detection of acrylamide is performed using tandem mass spectrometry (MS/MS) to monitor the transition at m/z 72 → 55 for acrylamide and m/z 75 → 58 for ¹³C₃-acrylamide. Analytical instrumentation used includes an Agilent 1200 HPLC equipped with vacuum degasser, binary pump, autosampler, and temperature-controlled column compartment coupled to Applied Biosystems 4000 QTrap hybrid triple-quadrupole/linear ion trap mass spectrometer with electrospray source. Chromatographic separation is performed using Phenomenex Synergi 4u Hydro-RP 80A (250mm x 2mm) reversed phase analytical column. The reflective values were measured by a Spectrophotomer manufactured by Agtron, Inc, located in Reno, Nevada.

For each of the examples below, Russet potatoes were washed and peeled. The Russet potatoes were cut into 0.5 inch by 0.5 inch by 0.5 inch dices. The dices were then blanched 10 minutes in a bath of hot water having a temperature of 165°F. The bath of hot water included 0.75% SAPP. The diced potatoes where then retrograded at room temperature using forced air for 20 minutes. The dried potatoes were shredded on a shredder that had a 5/16 inch medium shred plate. A composition was then formed that included about 97% Russet potatoes, 1.5% salt and about 1.5% other ingredients and flavorings.

The composition was mixed for 2 to 3 minutes. Patties were formed from the mixture using a rotary former with an oval shape. The dimension of the patty was about 2-3/8 inch width, a 4-3/4 length and a 1/2 inch thickness. The weight was about 77 grams.

### Example 1 - Batter Spray Formula 1 - 0% CaCl, No Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 1 primarily included starches and flours. The formula also included 0% by total weight calcium chloride, 0% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 1 - Raw Patty** | | |
|---|---|---|
| Replication | Calcium (g/100g) | Moisture (g/100g) |
| 1 | 0.007 | 75.27 |
| 2 | 0.007 | 74.61 |
| 3 | 0.008 | 74.49 |
| Std. Dev. | 0.001 | 0.42 |
| Average | 0.007 | 74.79 |

The raw patties were then par-fried in oil at a temperature of 375°F for 60 seconds. After being par-fried, the potato patties exhibited the following attributes:

| **Spray Batter Formula 1 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.009 | 66.51 | 10 | x | 90.2 | 88.3 |
| 2 | 0.011 | 64.82 | 11 | x | 91.0 | 88.3 |
| 3 | 0.007 | 63.14 | 31 | x | 95.3 | 94.4 |
| Std. Dev. | 0.002 | 1.69 | 12 | x | 2.7 | 3.5 |
| Average | 0.009 | 64.82 | 17 | 55.26 | 91.3 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 1 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.012 | 50.35 | 142 | x | 66.0 | 64.4 |
| 2 | 0.011 | 52.19 | 117 | x | 68.1 | 67.6 |
| 3 | 0.010 | 52.88 | 217 | x | 72.2 | 68.5 |
| Std. Dev. | 0.001 | 1.31 | 52 | x | 3.2 | 2.2 |
| Average | 0.011 | 51.81 | 159 | 48.04 | 68.7 | |

### Example 2 - Batter Spray Formula 2 - 0% CaCl, Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 2 primarily included starches and flours. The formula also included 0% by total weight calcium chloride, 0.18% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 2 - Raw Patty** | | |
|---|---|---|
| Replication | Calcium (g/100g) | Moisture (g/100g) |
| 1 | 0.009 | 75.25 |
| 2 | 0.010 | 74.86 |
| 3 | 0.006 | 74.71 |
| Std. Dev. | 0.002 | 0.28 |
| Average | 0.008 | 74.94 |

The raw patties were then par-fried in oil at a temperature of 375°F for 60 seconds. After being par-fried, the potato patties exhibited the following attributes:

| **Spray Batter Formula 2 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.010 | 65.50 | 34 | x | 86.9 | 86.6 |
| 2 | 0.011 | 66.05 | 31 | x | 82.4 | 82.0 |
| 3 | 0.007 | 64.57 | 50 | x | 90.0 | 89.2 |
| Std. Dev. | 0.002 | 0.75 | 10 | x | 3.8 | 3.6 |
| Average | 0.009 | 65.37 | 38 | x | 86.2 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 2 - After Refry** | | | | | | |
|---|---|---|---|---|---|---|
| Replication | Calcium (g/100g ) | Moisture (g/100g) | Acrylamide AA (ppb) | AA Percent Decrease from Control Average | Agtron Light Side | Agtron Dark Side |
| 1 | 0.011 | 53.56 | 256 | x | 49.6 | 48.1 |
| 2 | 0.011 | 58.70 | 211 | x | x | x |
| 3 | 0.008 | 53.41 | 450 | x | 54.9 | 49.1 |
| Std. Dev. | 0.001 | 3.01 | 127 | x | 3.7 | 0.7 |
| Average | 0.010 | 55.22 | 306 | x | 50.4 | |

### Example 3 - Batter Spray Formula 3 - 0% CaCl, No Dextrose, Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 3 primarily included starches and flours. The formula also included 0% by total weight calcium chloride, 0% by total weight dextrose, 0.397% by total weight caramel color powder, 0.109% by total weight annatto powder, and 0.400% by total weight Turmeric powder.

In a raw state, the chopped and formed patties exhibited the following attributes:

| **Spray Batter Formula 3 - Raw Patty** | | |
|---|---|---|
| Replication | Calcium (g/100g) | Moisture (g/100g) |
| 1 | 0.008 | 75.40 |
| 2 | 0.009 | 74.41 |
| 3 | 0.008 | 73.66 |
| Std. Dev. | 0.001 | 0.87 |
| Average | 0.008 | 74.49 |

The raw patties were then par-fried in oil at a temperature of 375°F for 60 seconds. After being par-fried, the potato patties exhibited the following attributes:

| **Spray Batter Formula 3 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.010 | 65.52 | 13 | x | 70.5 | 62.1 |
| 2 | 0.011 | 65.72 | 10 | x | 62.7 | 58.9 |
| 3 | 0.009 | 62.54 | 32 | x | 71.9 | 63.9 |
| Std. Dev. | 0.001 | 1.78 | 12 | x | 5.0 | 2.5 |
| Average | 0.010 | 64.59 | 18 | 52.63 | 65.0 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 3 - After Refry** | | | | | | |
|---|---|---|---|---|---|---|
| Replication | Calcium (g/100g ) | Moisture (g/100g) | Acrylamide AA (ppb) | AA Percent Decrease from Control Average | Agtron Light Side | Agtron Dark Side |
| 1 | 0.013 | 54.54 | 173 | x | 59.8 | 55.6 |
| 2 | 0.012 | 56.91 | 108 | x | 58.8 | 54.6 |
| 3 | 0.008 | 54.66 | 264 | x | 57.7 | 53.4 |
| Std. Dev. | 0.003 | 1.34 | 78 | x | 1.1 | 1.1 |
| Average | 0.011 | 55.37 | 182 | 40.52 | 56.7 | |

### Example 4 - Batter Spray Formula 4 - 0% CaCl, Dextrose, Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 4 primarily included starches and flours. The formula also included 0% by total weight calcium chloride, 0.18% by total weight dextrose, 0.397% by total weight caramel color powder, 0.109% by total weight annatto powder, and 0.400% by total weight Turmeric powder.

In a raw state, the chopped and formed patties exhibited the following attributes:

| **Spray Batter Formula 4 - Raw Patty** | | |
|---|---|---|
| Replication | Calcium (g/100g) | Moisture (g/100g) |
| 1 | 0.008 | 75.21 |
| 2 | 0.011 | 73.59 |
| 3 | 0.007 | 74.49 |
| Std. Dev. | 0.002 | 0.81 |
| Average | 0.008 | 74.43 |

The raw patties were then par-fried in oil at a temperature of 375°F for 60 seconds. After being par-fried, the potato patties exhibited the following attributes:

| **Spray Batter Formula 4 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.009 | 65.90 | 22 | x | 65.9 | 56.6 |
| 2 | 0.011 | 63.99 | 29 | x | 64.4 | 55.1 |
| 3 | 0.011 | 62.83 | 58 | x | 68.3 | 67.6 |
| Std. Dev. | 0.001 | 1.55 | 19 | x | 2.0 | 6.8 |
| Average | 0.010 | 64.24 | 36 | 5.26 | 63.0 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 4 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.010 | 57.25 | 252 | x | 49.8 | 46.3 |
| 2 | 0.011 | 56.64 | 221 | x | 50.0 | 47.9 |
| 3 | 0.011 | 55.56 | 363 | x | 49.0 | 44.7 |
| Std. Dev. | 0.001 | 0.86 | 75 | x | 0.5 | 1.6 |
| Average | 0.010 | 56.48 | 279 | 8.82 | 48.0 | |

### Example 5 - Batter Spray Formula 5 - 2% CaCl, No Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 5 primarily included starches and flours. The formula also included 2.00% by total weight calcium chloride, 0% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 5 - Raw Patty** | | |
|---|---|---|
| Replication | Calcium (g/100g) | Moisture (g/100g) |
| 1 | 0.013 | 75.51 |
| 2 | 0.014 | 74.70 |
| 3 | 0.010 | 74.25 |
| Std. Dev. | 0.002 | 0.64 |
| Average | 0.013 | 74.82 |

The raw patties were then par-fried in oil at a temperature of 375°F for 60 seconds. After being par-fried, the potato patties exhibited the following attributes:

| **Spray Batter Formula 5 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.017 | 65.04 | 10 | x | 93.8 | 90.6 |
| 2 | 0.019 | 65.30 | 10 | x | 93.6 | 90.2 |
| 3 | 0.017 | 62.51 | 12 | x | 99.4 | 96.8 |
| Std. Dev. | 0.001 | 1.54 | 1 | x | 3.3 | 3.7 |
| Average | 0.018 | 64.28 | 11 | 71.05 | 94.1 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 5 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.023 | 53.99 | 114 | x | 70.5 | 68.6 |
| 2 | 0.022 | 54.15 | 90 | x | 71.3 | 69.4 |
| 3 | 0.022 | 52.96 | 180 | x | 72.9 | 71.7 |
| Std. Dev. | 0.000 | 0.65 | 47 | x | 1.2 | 1.6 |
| Average | 0.022 | 53.70 | 128 | 58.17 | 70.7 | |

### Example 6 - Batter Spray Formula 6 - 2% CaCl, Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 6 primarily included starches and flours. The formula also included 2.00% by total weight calcium chloride, 0.18% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 6 - Raw Patty** | | |
|---|---|---|
| Replication | Calcium (g/100g) | Moisture (g/100g) |
| 1 | 0.017 | 75.20 |
| 2 | 0.017 | 74.44 |
| 3 | 0.013 | 74.03 |
| Std. Dev. | 0.002 | 0.59 |
| Average | 0.016 | 74.56 |

The raw patties were then par-fried in oil at a temperature of 375°F for 60 seconds. After being par-fried, the potato patties exhibited the following attributes:

| **Spray Batter Formula 6 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.017 | 66.43 | 10 | x | 90.7 | 89.2 |
| 2 | 0.020 | 65.83 | 17 | x | 90.9 | 87.2 |
| 3 | 0.012 | 63.90 | 27 | x | 94.7 | 90.8 |
| Std. Dev. | 0.004 | 1.32 | 9 | x | 2.3 | 1.8 |
| Average | 0.016 | 65.39 | 18 | 52.63 | 90.6 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 6 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.020 | 55.86 | 176 | x | 62.5 | 50.0 |
| 2 | 0.021 | 58.06 | 187 | x | 55.8 | 54.8 |
| 3 | 0.018 | 52.53 | 383 | x | 55.5 | 51.4 |
| Std. Dev. | 0.002 | 2.78 | 116 | x | 4.0 | 2.5 |
| Average | 0.020 | 55.48 | 249 | 18.63 | 55.0 | |

### Example 7 - Batter Spray Formula 7 - 4% CaCl, No Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 7 primarily included starches and flours. The formula also included 4.00% by total weight calcium chloride, 0% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 7 - Raw Patty** | | |
|---|---|---|
| Replication | Calcium (g/100g) | Moisture (g/100g) |
| 1 | 0.028 | 75.70 |
| 2 | 0.026 | 74.44 |
| 3 | 0.020 | 74.50 |
| Std. Dev. | 0.004 | 0.69 |
| Average | 0.024 | 74.91 |

The raw patties were then par-fried in oil at a temperature of 375°F for 60 seconds. After being par-fried, the potato patties exhibited the following attributes:

| **Spray Batter Formula 7 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.029 | 65.97 | 10 | x | 93.4 | 93.0 |
| 2 | 0.030 | 64.62 | 10 | x | 91.7 | 91.5 |
| 3 | 0.027 | 63.75 | 10 | x | 98.4 | 96.7 |
| Std. Dev. | 0.002 | 1.12 | 0 | x | 3.5 | 2.7 |
| Average | 0.029 | 64.78 | 10 | 73.68 | 94.1 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 7 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.037 | 55.94 | 71 | x | 75.8 | 71.1 |
| 2 | 0.035 | 57.83 | 51 | x | 74.1 | 72.3 |
| 3 | 0.032 | 54.53 | 144 | x | 76.1 | 72.4 |
| Std. Dev. | 0.003 | 1.66 | 49 | x | 1.1 | 0.7 |
| Average | 0.035 | 56.10 | 89 | 70.92 | 73.6 | |

### Example 8 - Batter Spray Formula 8 - 4% CaCl, Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 8 primarily included starches and flours. The formula also included 4.00% by total weight calcium chloride, 0% by total weight dextrose, 0.18% by total weight caramel color powder, 0% by total weight annatto powder, and 0% by total weight Turmeric powder.

In a raw state, the chopped and formed patties exhibited the following attributes:

| **Spray Batter Formula 8 - Raw Patty** | | |
|---|---|---|
| Replication | Calcium (g/100g) | Moisture (g/100g) |
| 1 | 0.031 | 75.16 |
| 2 | 0.020 | 74.40 |
| 3 | 0.022 | 74.30 |
| Std. Dev. | 0.006 | 0.47 |
| Average | 0.024 | 74.62 |

The raw patties were then par-fried in oil at a temperature of 375°F for 60 seconds. After being par-fried, the potato patties exhibited the following attributes:

| **Spray Batter Formula 8 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.031 | 64.65 | 13 | x | 88.0 | 86.8 |
| 2 | 0.027 | 65.55 | 10 | x | 72.9 | 72.9 |
| 3 | 0.019 | 65.04 | 10 | x | 93.2 | 91.4 |
| Std. Dev. | 0.006 | 0.45 | 2 | x | 10.5 | 9.6 |
| Average | 0.026 | 65.08 | 11 | 71.05 | 84.2 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 8 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.036 | 49.52 | 236 | x | 47.7 | 46.7 |
| 2 | 0.027 | 55.30 | 250 | x | 55.3 | 48.3 |
| 3 | 0.031 | 54.03 | 235 | x | 62.4 | 54.8 |
| Std. Dev. | 0.005 | 3.04 | 8 | x | 7.4 | 4.3 |
| Average | 0.031 | 52.95 | 240 | 21.57 | 52.5 | |

### Example 9 - Batter Spray Formula 9 - 4% CaCl, No Dextrose, Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 9 primarily included starches and flours. The formula also included 4.00% by total weight calcium chloride, 0% by total weight dextrose, 0.397% by total weight caramel color powder, 0.109% by total weight annatto powder, and 0.400% by total weight Turmeric powder.

In a raw state, the chopped and formed patties exhibited the following attributes:

| **Spray Batter Formula 9 - Raw Patty** | | |
|---|---|---|
| Replication | Calcium (g/100g) | Moisture (g/100g) |
| 1 | 0.024 | 74.33 |
| 2 | 0.026 | 74.12 |
| 3 | 0.017 | 74.46 |
| Std. Dev. | 0.005 | 0.17 |
| Average | 0.022 | 74.30 |

The raw patties were then par-fried in oil at a temperature of 375°F for 60 seconds. After being par-fried, the potato patties exhibited the following attributes:

| **Spray Batter Formula 9 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.029 | 65.00 | 10 | x | 66.1 | 66.0 |
| 2 | 0.032 | 64.29 | 10 | x | 70.9 | 61.7 |
| 3 | 0.020 | 64.94 | 10 | x | 77.3 | 66.8 |
| Std. Dev. | 0.006 | 0.39 | 0 | x | 5.6 | 2.7 |
| Average | 0.027 | 64.74 | 10 | 73.68 | 68.1 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 9 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.034 | 56.21 | 100 | x | 61.9 | 55.3 |
| 2 | 0.034 | 57.54 | 50 | x | 60.8 | 56.1 |
| 3 | 0.028 | 53.48 | 221 | x | 64.0 | 55.6 |
| Std. Dev. | 0.003 | 2.07 | 88 | x | 1.6 | 0.4 |
| Average | 0.032 | 55.74 | 124 | 59.48 | 59.0 | |

### Example 10 - Batter Spray Formula 10 - 4% CaCl, Dextrose, Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 10 primarily included starches and flours. The formula also included 4.00% by total weight calcium chloride, 0.18% by total weight dextrose, 0.397% by total weight caramel color powder, 0.109% by total weight annatto powder, and 0.400% by total weight Turmeric powder.

| **Formula 10 - 4% CaCl: Dextrose: Colorant** | |
|---|---|
| **Ingredient Description** | **Percentage** |
| | |
| Starches | 60.83 |
| Flour | 20.18 |
| Dextrin | 9.50 |
| Salt | 2.50 |
| Sodium Acid Pyrophosphate | 1.10 |
| Baking Soda | 0.75 |
| Gum | 0.05 |
| Dextrose | 0.18 |
| Xanthan Gum Powder | 0.05 |
| Calcium Chloride | 4.00 |
| Caramel Color Powder | 0.397 |
| Annatto Powder | 0.109 |
| Tumeric Powder | 0.400 |

In a raw state, the chopped and formed patties exhibited the following attributes:

| **Spray Batter Formula 10 - Raw Patty** | | |
|---|---|---|
| Replication | Calcium (g/100g) | Moisture (g/100g) |
| 1 | 0.024 | 75.35 |
| 2 | 0.021 | 72.93 |
| 3 | 0.022 | 73.84 |
| Std. Dev. | 0.001 | 1.22 |
| Average | 0.022 | 74.04 |

The raw patties were then par-fried in oil at a temperature of 375°F for 60 seconds. After being par-fried, the potato patties exhibited the following attributes:

| **Spray Batter Formula 10 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.026 | 64.67 | 10 | x | 68.2 | 64.9 |
| 2 | 0.029 | 63.72 | 10 | x | 67.4 | 67.6 |
| 3 | 0.025 | 63.29 | 11 | x | 70.4 | 66.3 |
| Std. Dev. | 0.002 | 0.71 | 1 | x | 1.6 | 1.4 |
| Average | 0.027 | 63.89 | 10 | 73.68 | 67.5 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 10 - After Refry** | | | | | | |
|---|---|---|---|---|---|---|
| Replication | Calcium (g/100g ) | Moisture (g/100g) | Acrylamide AA (ppb) | AA Percent Decrease from Control Average | Agtron Light Side | Agtron Dark Side |
| 1 | 0.028 | 58.57 | 135 | x | 53.7 | 49.3 |
| 2 | 0.029 | 57.51 | 113 | x | 55.5 | 49.9 |
| 3 | 0.028 | 55.76 | 170 | x | 51.2 | 49.0 |
| Std. Dev. | 0.001 | 1.42 | 29 | x | 2.2 | 0.5 |
| Average | 0.029 | 57.28 | 139 | 54.58 | 51.4 | |

### Example 11 - Batter Spray Formula 11 - 6% CaCl, No Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for Example 11 primarily included starches and flours. The formula also included 6.00% by total weight calcium chloride, 0% by total weight dextrose, 0% by total weight caramel color powder, 0% by total weight annatto powder, and 0% by total weight Turmeric powder.

In a raw state, the chopped and formed patties exhibited the following attributes:

| **Spray Batter Formula 11 - Raw Patty** | | |
|---|---|---|
| Replication | Calcium (g/100g) | Moisture (g/100g) |
| 1 | 0.027 | 75.49 |
| 2 | 0.035 | 74.47 |
| 3 | 0.037 | 74.29 |
| Std. Dev. | 0.005 | 0.65 |
| Average | 0.033 | 74.75 |

The raw patties were then par-fried in oil at a temperature of 375°F for 60 seconds. After being par-fried, the potato patties exhibited the following attributes:

| **Spray Batter Formula 11 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.034 | 66.04 | 10 | x | 93.2 | 92.6 |
| 2 | 0.040 | 65.70 | 10 | x | 93.7 | 93.2 |
| 3 | 0.039 | 64.52 | 10 | x | 98.2 | 97.9 |
| Std. Dev. | 0.003 | 0.80 | 0 | x | 2.8 | 2.9 |
| Average | 0.038 | 65.42 | 10 | 73.68 | 94.8 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 11 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.045 | 56.44 | 57 | x | 75.9 | 71.3 |
| 2 | 0.048 | 58.64 | 32 | x | 78.2 | 74.1 |
| 3 | 0.047 | 54.24 | 127 | x | 88.4 | 87.0 |
| Std. Dev. | 0.002 | 2.20 | 49 | x | 6.7 | 8.4 |
| Average | 0.047 | 56.44 | 72 | 76.47 | 79.2 | |

### Example 12 - Batter Spray Formula 12 - 6% CaCl, Dextrose, No Colorant

After the patties were formed as indicated above, a batter spray was applied to the patties having the formula as indicated below. The formula includes the dry weight of the ingredients. In order to facilitate the sprayability of the batter, the dry ingredients were mixed with water until the mixture was sprayable from an aerosolize spray system having a 45 Hz Top Pump Speed, 32% Lower Pump Speed, and 30 FPM chain speed). The dry batter mix was hydrated to 37% solids. Stated another way, 4200 grams of the dry batter mix was hydrated with 7150 grams of water. About 2.5 grams to about 3.0 grams of the wet batter was sprayed on each side of the patties for a total pick-up from about 5 to about 6 grams per patty.

The batter formula for the Example 12 primarily included starches and flours. The formula also included 6.00% by total weight calcium chloride, 0.18% by total weight dextrose, 0% by total weight caramel color powder, 0% by total weight annatto powder, and 0% by total weight Tumeric powder.

In a raw state, the chopped and formed patties exhibited the following attributes:

| **Spray Batter Formula 12 - Raw Patty** | | |
|---|---|---|
| Replication | Calcium (g/100g) | Moisture (g/100g) |
| 1 | 0.037 | 75.30 |
| 2 | 0.033 | 74.70 |
| 3 | 0.032 | 74.55 |
| Std. Dev. | 0.003 | 0.40 |
| Average | 0.034 | 74.85 |

The raw patties were then par-fried in oil at a temperature of 375°F for 60 seconds. After being par-fried, the potato patties exhibited the following attributes:

| **Spray Batter Formula 12 - After Par-fry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.035 | 65.91 | 10 | x | 90.7 | 89.2 |
| 2 | 0.028 | 65.61 | 10 | x | 91.9 | 89.7 |
| 3 | 0.029 | 63.86 | 10 | x | 94.3 | 93.1 |
| Std. Dev. | 0.004 | 1.11 | 0 | x | 1.8 | 2.1 |
| Average | 0.031 | 65.13 | 10 | 73.68 | 91.5 | |

After being par-fried, the patties were frozen and divided into 1.5 pound bags. Random samples were then pulled from the bag and refried. During refry, the patties were subjected to 360°F for 3 minutes. The refried potato patties exhibited the following attributes:

| **Spray Batter Formula 12 - After Refry** | | | | | | |
|---|---|---|---|---|---|---|
| Replication | Calcium (g/100g) | Moisture (g/100g) | Acrylamide AA (ppb) | AA Percent Decrease from Control Average | Agtron Light Side | Agtron Dark Side |
| 1 | 0.040 | 54.28 | 133 | x | 56.8 | 56.0 |
| 2 | 0.034 | 55.27 | 141 | x | 63.7 | 56.4 |
| 3 | 0.036 | 54.85 | 189 | x | 60.7 | 55.2 |
| Std. Dev. | 0.003 | 0.50 | 30 | x | 3.5 | 0.6 |
| Average | 0.037 | 54.80 | 154 | 49.67 | 58.1 | |

### Example 13 - Color and Acrylamide Comparison

The average color for each of the above Examples 1-12 was compared. Example 2 was chosen as the control for this comparison because Example 2 was treated to have an acceptable color but was not treated to reduce acrylamide formation. A target reflective value of 49 was chosen in that it represents a darkness that is golden and is considered an acceptable darkness for most customers of the potato product. Generally, a color value that is within about 10 of the target color is considered acceptable for potato patties for most consumers. The target color was subtracted from the average color value for each sample to obtain a deviation as indicated below.

| **Color Comparison - Refry** | | | | | |
|---|---|---|---|---|---|
| **Formula** | **Average Color** | **Target Color** | **Upper Limit** | **Lower Limit** | **Deviation from Target** |
| 1 | 68.7 | 49.0 | 60.0 | 40.0 | 19.7 |
| 2 | 50.4 | 49.0 | 60.0 | 40.0 | 1.4 |
| 3 | 56.7 | 49.0 | 60.0 | 40.0 | 7.7 |
| 4 | 48.0 | 49.0 | 60.0 | 40.0 | -1.0 |
| 5 | 70.7 | 49.0 | 60.0 | 40.0 | 21.7 |
| 6 | 55.0 | 49.0 | 60.0 | 40.0 | 6.0 |
| 7 | 73.6 | 49.0 | 60.0 | 40.0 | 24.6 |
| 8 | 52.5 | 49.0 | 60.0 | 40.0 | 3.5 |
| 9 | 59.0 | 49.0 | 60.0 | 40.0 | 10.0 |
| 10 | 51.4 | 49.0 | 60.0 | 40.0 | 2.4 |
| 11 | 79.2 | 49.0 | 60.0 | 40.0 | 30.2 |
| 12 | 58.1 | 49.0 | 60.0 | 40.0 | 9.1 |

The average acrylamide levels for each of the above Examples 1-12 were also compared in relation to the color comparison indicated above. Again, Example 2 was the control for this comparison because Example 2 was treated to have an acceptable color but was not treated to reduce acrylamide formation. The reduction in acrylamide is indicated below.

| **Acrylamide Comparison - Refried** | | | | |
|---|---|---|---|---|
| **Formula** | **Average Acrylamide** | **Control** | **Reduction (ppb)** | **Percentage Reduction** |
| 1 | 159 | 306 | 147 | 48.04% |
| 2 | 306 | 306 | 0 | 0.00% |
| 3 | 182 | 306 | 124 | 40.52% |
| 4 | 279 | 306 | 27 | 8.82% |
| 5 | 128 | 306 | 178 | 58.17% |
| 6 | 249 | 306 | 57 | 18.63% |
| 7 | 89 | 306 | 217 | 70.92% |
| 8 | 240 | 306 | 66 | 21.57% |
| 9 | 124 | 306 | 182 | 59.48% |
| 10 | 139 | 306 | 167 | 54.58% |
| 11 | 72 | 306 | 234 | 76.47% |
| 12 | 154 | 306 | 152 | 49.67% |

As can be seen from the tables above, Examples 1-4 did not include calcium chloride. When calcium chloride is not present, the potato patties get darker when dextrose is added to the batter as indicated in Examples 2 and 4. Yet, when calcium chloride is not present and an acceptable color is achieved via dextrose (e.g. examples 2 and 4), the acrylamide levels are 306 (ppb) and 279 (ppb), respectively. As indicated in Example 3, the addition of a colorant and the removal of dextrose caused a fairly significant decrease in acrylamide levels in comparison to the control (40.52%).

Examples 5-12, include samples that include varying levels of calcium chloride as indicated above. Examples 5 (2% calcium chloride), 7 (4% calcium chloride), and 11 (6% calcium chloride) include calcium chloride but do not include any type of colorant or dextrose. As can be seen, the samples related to Examples 5, 7 and 11 all include between about 60% and 80% reduction in acrylamide levels as compared to the control. Yet, Examples 5, 7, and 11 included color between 70.7 and 79.2 which is well above the target range and would represent a whitish color that would be unacceptable to consumers. Furthermore, as the percentage of calcium chloride increases the color value also increases. In this light, the increase in calcium chloride benefits the reduction of acrylamide but also decreases the consumer acceptability of the color.

Examples 6, 8, and 12 include samples that were treated with calcium chloride and include dextrose. As indicated in Example 6, where the lowest amount of calcium chloride (2%) was utilized, a color (55) within the target color range was achieved and an 18.53% decrease in acrylamide was obtained. In Example 8, when the amount of calcium chloride was doubled (4%) the color stayed about the same (52.5) and slightly more acrylamide formation was mitigated (21.57%). At the 6% calcium chloride level, the reduction in acrylamide formation was increased to 49.67% but the color level (still within the target range) increases slightly to 58.1. As indicated, the use of dextrose increases the formation of acrylamide but facilitates the formation of an acceptable color. Yet, the combination of calcium chloride and dextrose can cause a reduction in the formation of acrylamide while providing a color with an acceptable target color range.

Examples 9 and 10 include samples what were treated with calcium chloride and one or more colorants. As indicated in Example 9 (6% calcium chloride), the colorant facilitated a color at the high end of the acceptable target range (59.0) yet a 59.48% acrylamide reduction was achieved in comparison to the control. As indicated in Example 10 (4% calcium chloride), when the colorant is augmented with dextrose, the achieved color tightens closer to the target (51.4) and the reduction of acrylamide formation is only slightly affected (54.18% as compared to 59.48%).

### CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The present disclosures are also defined by way of the following clauses:
1. A process for mitigating acrylamide formation of a reconstituted potato aggregate, the process comprising:
   shredding a potato;
   forming shreds of the potato into the potato aggregate;
   applying a sprayable surface application to the potato aggregate, wherein the surface application includes:
      water,
      a starch,
      a divalent metal salt from about 1 % to about 10% total weight of the dry mix of the surface application, and
      a color augmenter from about 0.1 % to about 2.0% total weight of the dry mix, wherein the color augmenter includes at least one member of a group comprising: dextrose, caramel, annatto, and Turmeric;
   par-frying the potato aggregate at a temperature of about 350°F to about 400°F for about 10 seconds to about 200 seconds; and
   when the par-fried potato aggregate is reconstituted at a temperature of about 300°F to about 500°F for about 2 minutes to about 30 minutes, the reconstituted potato aggregate includes:
      a plurality of reconstituted potato pieces forming the reconstituted potato aggregate,
      a reconstituted batter on the surface of the reconstituted potato pieces,
      an average acrylamide level that is less than about 400 ppb, and
      an average reflectance value of the reconstituted potato aggregate that is between about 40 and about 65.
2. The process of clause 1, wherein forming the shreds into the potato aggregate includes forming at least one member of a group comprising:
   a patty having a weight from about 50 grams to about 150 grams, a width from about 2 inches to about 4 inches, a length from about 3 inches to about 5 inches, and a thickness from about 0.25 inches to about 1 inch; and
   a cylinder having a diameter from about 0.5 inches to about 1.5 inches and a weight from about 6 grams to about 12 grams.
3. The process of clause 1, wherein the divalent metal salt is calcium chloride.
4. The process of clause 1, wherein the color augmenter includes at least one member of a group comprising:
   dextrose from about 0.1 % to about 0.3% total weight of the dry mix,
   annatto from about 0.01 % to about 0.2% total weight of the dry mix,
   caramel from about 0.2% to about 0.6% total weight of the dry mix, and
   Turmeric from about 0.2% to about 0.6% total weight of the dry mix.
5. The process of clause 1, wherein the potato aggregate is par-fried for about 60 seconds to about 90 seconds, wherein the par-fried potato aggregate is reconstituted via refry at an oil temperature from about 300°F to about 400°F for about 2.0 minutes to about 4.0 minutes.
6. The process of clause 1, wherein the potato aggregate is par-fried for about 90 seconds to about 200 seconds, wherein the par-fried potato aggregate is reconstituted via baking at a temperature from about 350°F to about 500°F for about 5.0 minutes to about 30.0 minutes.
7. A process for mitigating acrylamide formation in a potato aggregate, the process comprising:
   shredding a potato;
   forming shreds of the potato into the potato aggregate;
   applying a surface application to the potato aggregate, wherein the surface application includes:
      a starch,
      a divalent metal salt form about 0.10% to about 10% total weight of the dry mix of the surface application, and
      a color augmenter from about 0.1 % to about 1.5% total weight of the dry mix;
   par-frying the potato aggregate at a temperature of about 350 °F to about 400 °F for about 10 seconds to about 200 seconds; and
   packaging the par-fried potato aggregate, wherein, the par-fried potato aggregate is formed to produce an average reconstituted acrylamide level of less than about 400 ppb and an average reconstituted reflective value of less than about 65.
8. The process of clause 7, wherein the divalent metal salt is calcium chloride,.
9. The process of clause 7, wherein the color augmenter includes at least one member of a group comprising: a colorant and a browning agent.
10. The process of clause 9, wherein the colorant includes at least one member of a group comprising: annatto, caramel, and turmeric.
11. The process of clause 10, wherein the colorant includes at least one member of a group comprising:
   annatto from about 0.01 % to about 0.2% total weight of the dry mix,
   caramel from about 0.2% to about 0.6% total weight of the dry mix, and
   turmeric from about 0.2% to about 0.6% total weight of the dry mix.
12. The process of clause 9, wherein the browning agent includes at least one member of a group comprising: sugar and dextrose.
13. The process of clause 12, wherein the dextrose is from about 0.1 % to about 0.3% total weight of the dry mix.
14. The process of clause 7, wherein the potato aggregate is par-fried for about 60 seconds to about 90 seconds, where the average reconstituted acrylamide level is an average refried reconstituted acrylamide level, wherein that average refried reconstitution acrylamide level is less than about 400 ppb and the average refried reconstitution reflective value is less than about 65.
15. The process of clause 7, wherein the potato aggregate is par-fried for about 90 seconds to about 200 seconds, where the average reconstituted acrylamide level is an average baked reconstituted acrylamide level, wherein that average baked reconstitution acrylamide level is less than about 400 ppb and the average baked reconstitution reflective value is less than about 65.
16. A reconstituted potato aggregate, the reconstituted potato aggregate comprising:
   a plurality of potato pieces forming the potato aggregate;
   a batter on the surface of the potato pieces, wherein the batter includes:
      calcium from about 0.01 % to about 0.10% total weight of the potato aggregate, and
      a color augmenter from about 0.1 % to about 1.5% total weight of the dry batter mix;
   an average acrylamide level of the reconstituted potato aggregate that is less than about 400 ppb; and
   an average reflectance value of the reconstituted potato aggregate that is less than about 65.
17. The reconstituted potato aggregate of clause 16, wherein the potato includes a form of at least one member of a group comprising:
   a patty having a weight from about 50 grams to about 150 grams, a width from about 2 inches to about 4 inches, a length from about 3 inches to about 5 inches, and a thickness from about 0.25 inches to about 1 inch; and
   a cylinder having a diameter from about 0.5 inches to about 1.5 inches and a weight from about 6 grams to about 12 grams.
18. The reconstituted potato aggregate of clause 16, wherein the color augmenter includes at least one member of a group comprising: a colorant and a browning agent.
19. The reconstituted potato aggregate of clause 18, wherein the colorant includes at least one member of a group comprising: annatto, caramel, and Turmeric.
20. The reconstituted potato aggregate of clause 19, wherein the colorant includes at least one member of a group comprising:
   annatto from about 0.01 % to about 0.2% total weight of the dry mix,
   caramel from about 0.2% to about 0.6% total weight of the dry mix, and
   Turmeric from about 0.2% to about 0.6% total weight of the dry mix.
21. The reconstituted potato aggregate of clause 18, wherein the browning agent includes at least one member of a group comprising: sugar and dextrose.
22. The reconstituted potato aggregate of clause 21, wherein the dextrose is from about 0.1 % to about 0.3% total weight of the dry mix.
23. The reconstituted potato aggregate of clause 16, wherein the reconstituted potato aggregate is at least one member of a group comprising: a baked reconstituted potato aggregate, and a refry reconstituted potato aggregate.
24. The reconstituted potato aggregate of clause 16, wherein the average reflectance value of the reconstituted potato aggregate is from about 40 to about 65.

## Claims

1. A process for mitigating acrylamide formation in a potato aggregate, the process comprising:
shredding a potato;
forming shreds of the potato into the potato aggregate;
applying a surface application to the potato aggregate, wherein the surface application includes:
a starch,
a divalent metal salt form about 0.10% to about 10% total weight of the dry mix of the surface application, and
a color augmenter from about 0.1 % to about 1.5% total weight of the dry mix;
par-frying the potato aggregate at a temperature of about 350 °F to about 400 °F for about 10 seconds to about 200 seconds; and
packaging the par-fried potato aggregate, wherein, the par-fried potato aggregate is formed to produce an average reconstituted acrylamide level of less than about 400 ppb and an average reconstituted reflective value of less than about 65.

2. The process of claim 1, wherein the divalent metal salt is calcium chloride.

3. The process of claims 1-2, wherein the color augmenter includes at least one member of a group comprising: a colorant and a browning agent.

4. The process of claim 3, wherein the colorant includes at least one member of a group comprising: annatto, caramel, and turmeric.

5. The process of claim 3, wherein the colorant includes at least one member of a group comprising:
annatto from about 0.01 % to about 0.2% total weight of the dry mix,
caramel from about 0.2% to about 0.6% total weight of the dry mix, and
turmeric from about 0.2% to about 0.6% total weight of the dry mix.

6. The process of claim 3, wherein the browning agent includes at least one member of a group comprising: sugar and dextrose.

7. The process of claim 6, wherein the dextrose is from about 0.1 % to about 0.3% total weight of the dry mix.

8. The process of claims 1-7, wherein the potato aggregate is par-fried for about 60 seconds to about 90 seconds, where the average reconstituted acrylamide level is an average refried reconstituted acrylamide level, wherein that average refried reconstitution acrylamide level is less than about 400 ppb and the average refried reconstitution reflective value is less than about 65.

9. The process of claims 1-7, wherein the potato aggregate is par-fried for about 90 seconds to about 200 seconds, where the average reconstituted acrylamide level is an average baked reconstituted acrylamide level, wherein that average baked reconstitution acrylamide level is less than about 400 ppb and the average baked reconstitution reflective value is less than about 65.

10. The process of claims 1-9, wherein forming the shreds into the potato aggregate includes forming at least one member of a group comprising:
a patty having a weight from about 50 grams to about 150 grams, a width from about 2 inches to about 4 inches, a length from about 3 inches to about 5 inches, and a thickness from about 0.25 inches to about 1 inch; and
a cylinder having a diameter from about 0.5 inches to about 1.5 inches and a weight from about 6 grams to about 12 grams.
